(19) Europäisches Patentamt
European Patent Office
Office européen des brevets

(11) **EP 2 671 459 B1**

(12) **EUROPEAN PATENT SPECIFICATION**

(45) Date of publication and mention
of the grant of the patent:
**19.10.2016 Bulletin 2016/42**

(21) Application number: **13170303.5**

(22) Date of filing: **03.06.2013**

(51) Int Cl.:
*A23B 4/005* (2006.01)     *B65B 55/02* (2006.01)
*B65B 25/06* (2006.01)     *B65B 55/22* (2006.01)
*A23L 17/00* (2016.01)     *B65B 31/00* (2006.01)
*B65B 55/14* (2006.01)

(54) **Process for packing a product based on portions of fish in the solid form and relative packed product**

Verfahren zum Verpacken eines Produkts auf der Grundlage von Fischportionen in fester Form und zugehöriges verpacktes Produkt

Procédé pour emballer un produit basé sur des parties de poissons dans la forme solide et produit emballé associé

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **04.06.2012 IT MI20120965**

(43) Date of publication of application:
**11.12.2013 Bulletin 2013/50**

(73) Proprietor: **Bolton Alimentari S.P.A.**
**22072 Cermenate (Como) (IT)**

(72) Inventors:
• **CORTI, Adriana**
**22074 LOMAZZO (CO) (IT)**
• **DE DIONIGI, Stefano**
**20010 INVERUNO (MI) (IT)**
• **ROSA, Alberto**
**20833 GIUSSANO (MB) (IT)**

(74) Representative: **Branca, Emanuela**
**Barzanò & Zanardo Milano S.p.A.**
**Via Borgonuovo, 10**
**20121 Milano (IT)**

(56) References cited:
**JP-A- 4 152 863**     **JP-A- 11 028 078**
**US-A- 6 066 354**

**Description**

The present invention refers to a process for packing a product based on portions of fish in the solid form and to a relative packaged product.

In particular, it concerns the field of products based on cooked fish, commercially sterile and that comes ready to use when the package is opened.

By portions of fish in the solid form we mean for example filets or steaks of fish such as salmon, tuna, bass, in which intact muscle bundles are recognisable.

"Commercial sterility of thermally processed food" stands for the condition achieved by application of heat sufficient, alone or in combination with other appropriate treatments, to render the food free from microorganisms capable of growing in the food at normal non-refrigerated conditions at which the food is likely to be held during distribution and storage" according to the definition contained in the Codex Alimentarius, document CAC/RCP 23-1979, rev. 2 (1993). The Codex Alimentarius is a set of rules and standards establishing the harmonised standards at the worldwide level relating to foods drafted by the Codex Alimentarius Commission, a Commission founded in 1963 by the FAO and by the World Health Organization (WHO).

In the preparation of packaged products based on fish, packaged started from raw fish, which when the package is opened is commercially sterile and ready to use, according to the relevant prior art to the present invention, it is known to package filets or steaks of fish starting from raw material in the frozen state, in other words stored before packaging at a temperature of about -20°C.

The frozen raw fish is then thawed according to various known technologies, in particular spraying it with water, which constitutes a relatively quick procedure but that causes fish to be washed out, or in ambient air, a procedure that keeps the fish more intact but that takes longer.

The thawed fish is then cut and shaped into portions to be packaged and inserted in a metallic container together with a filling liquid, such as water or oil introduced to completely fill the top space and optionally containing flavourings or, in particular salt, partially washed out during thawing.

The package of fish is then sealed and heat sterilized in an autoclave, according to known methods, which substantially comprise heating to temperatures around 110°-120°C and maintaining such a temperature for about one hour.

In the following description "heat sterilization", even where not expressly specified, always stands for heat sterilization carried out in an autoclave.

During heat sterilization, the fish immersed in the filling liquid is subject to numerous chemical-physical reactions, the most evident of which consists of the release of albumins that have a pasty/lumpy white appearance. They are hydro-soluble proteins released during cooking by the muscle tissues of fish.

The product thus obtained is of the type suitable for conservation, in normal storage conditions, for a period that can vary from 24 to 60 months.

Since albumins are perceived by the consumer as a negative factor for the quality of the end product, in order to reduce their presence in the package, the portion of fish is precooked during the packing process to aid the release of albumins that are removed, for example with a water jet, before the addition of the filling liquid and the sealing of the package.

Despite this provision, during the heat sterilization of the sealed package, according to the known processes used for packing, there is further substantial release of albumin, equal to an amount that can clearly be seen with the naked eye when the package is opened in the form of a pasty/lumpy white portion, which unevenly covers the upper surface of the portion of fish and is also contained in dispersion in the filling liquid.

The portion of fish also has poor consistency, in other words tending to flake and/or crumble, with the muscle bundles substantially less well-defined, in other words no longer easy to separate from one another.

As an example of the described prior art, figures 1, 3 and 5 show black and white photographs of a slice of fillet of salmon 10' packaged according to the known process described, in other words of a portion of salmon cut from a fillet of salmon.

Figure 1 is an enlarged view of a slice of salmon 10' and of relative filling liquid 11' emptied from a package 20' and put on a plate ready for use. From the enlarged photo it is easy to see the presence of albumin proteins 14' both deposited on the upper surface of the slice and dispersed in the filling liquid 11'.

Figure 3 shows the entire content of the package 20' of sliced salmon emptied onto a plate to allow a visual quantification of the filling liquid 11' contained in the package 20'.

Figure 5, on the other hand, shows an example of a metal package 20', from which the cover has been removed, containing the slice of salmon 10' according to the prior art.

As an alternative to packaging in a rigid metallic container, Japanese document JP 4 152863 A, on the other hand, teaches to vacuum package in a bag a head of tuna, which has been cut into slices still in the frozen state, as well as to treat it with heat after vacuum packaging.

The main drawbacks of the described prior art concern, in particular, the release of albumins from the fish during cooking and their presence in pasty/lumpy form on the fish itself and in dispersion in the filling liquid.

Moreover, the packing process according to the prior art provides for a relatively large number of successive steps and therefore a packaging line of substantial bulk.

Moreover, during some of the steps of the process according to the prior art the fish is subject to invasive treatments such as washing out to thaw and precooking with subsequent removal of albumins, which contribute, together with the chemical-physical processes that take place during heat sterilization, to making the muscle bundles no longer clearly defined.

There are also known products based on portions of fish in the solid form vacuum packaged with a package in flexible plastic material, like for example smoked salmon, which are not subjected to the heat sterilization process and therefore are not produced commercially sterile and have a shelf life of a few days/weeks at most.

Other products based on fish that are not subjected to the heat sterilization process are described for example in Japanese document JP 11 028078 A, which teaches to vacuum package portions of fish in the frozen state and to sterilize them cold through a high-pressure sterilization process.

The purpose of the present invention is to make a process for packing a product based on portions of fish in the solid form and a relative packaged product based on cooked fish, commercially sterile and that is ready to use when the package is opened, which allow the aforementioned technical drawbacks to be overcome.

Another purpose of the present invention is to make a process for packing a product based on portions of fish in the solid form and a relative packaged product that achieve an optimal result in terms of conservation of the organoleptic properties of the product during the entire commercial life.

A further purpose of the present invention is to make a process for packing a product based on portions of fish in the solid form and a relative packaged product that require a spatially compact production line.

These purposes according to the present invention are accomplished by making a process for packing a product based on portions of fish in the solid form and a relative packaged product as outlined in the independent claims.

Further characteristics are provided for in the dependent claims.

The characteristics and advantages of a process for packing a product based on portions of fish in the solid form and of a relative packaged product according to the present invention will become clearer from the following description, given as a non-limiting example, referring to the attached schematic drawings, in which:

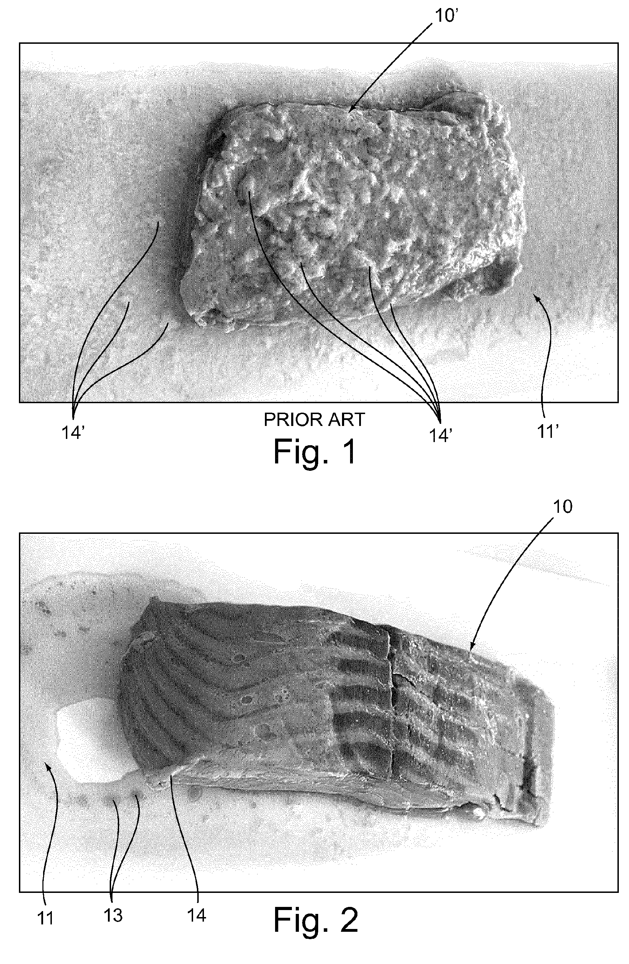

figure 1 is an enlarged view of a slice of salmon and of the relative filling liquid, according to the state of the art, emptied from the package and put on a plate;

figure 2 is an enlarged view of a slice of salmon, according to the invention, emptied from the package and put on a plate;

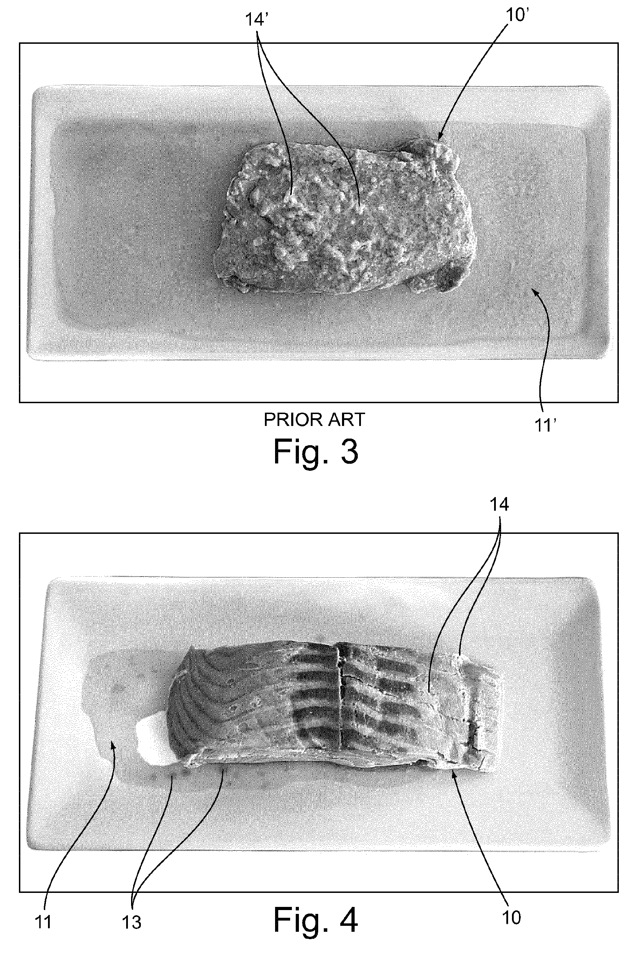

figure 3 shows the entire content of the package of sliced salmon, according to the state of the art, emptied onto a plate;

figure 4 shows the entire content of the package of sliced salmon, according to the invention, emptied onto a plate;

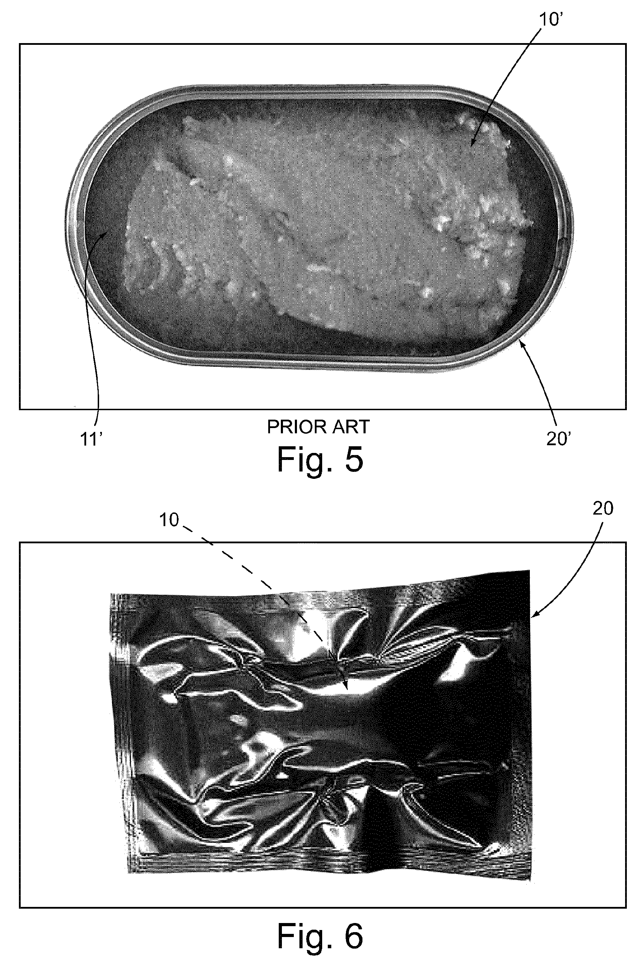

figure 5 shows an example of a metallic package, according to the state of the art, from which the cover has been removed, containing the slice of salmon of figures 1 and 3;

figure 6 shows an example of a flexible package, according to the invention, containing a product based on portions of fish in the solid form;

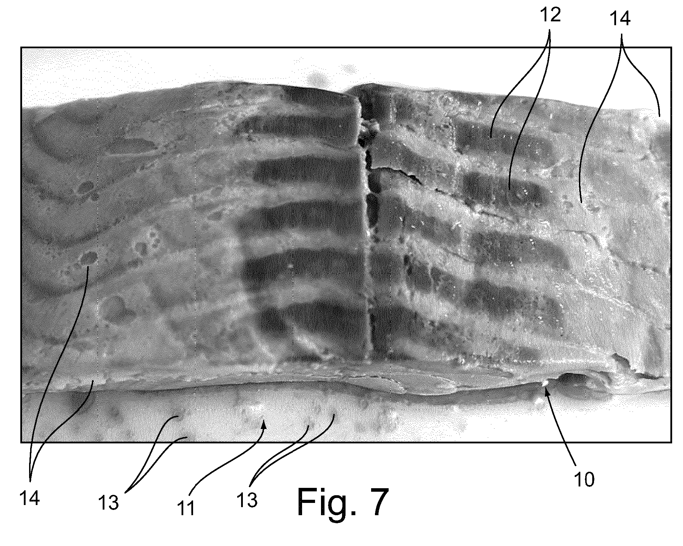

figure 7 is an enlarged photo of the slice of salmon of figures 2 and 4, shown as an example of a product based on portions of fish in the solid form according to the invention;

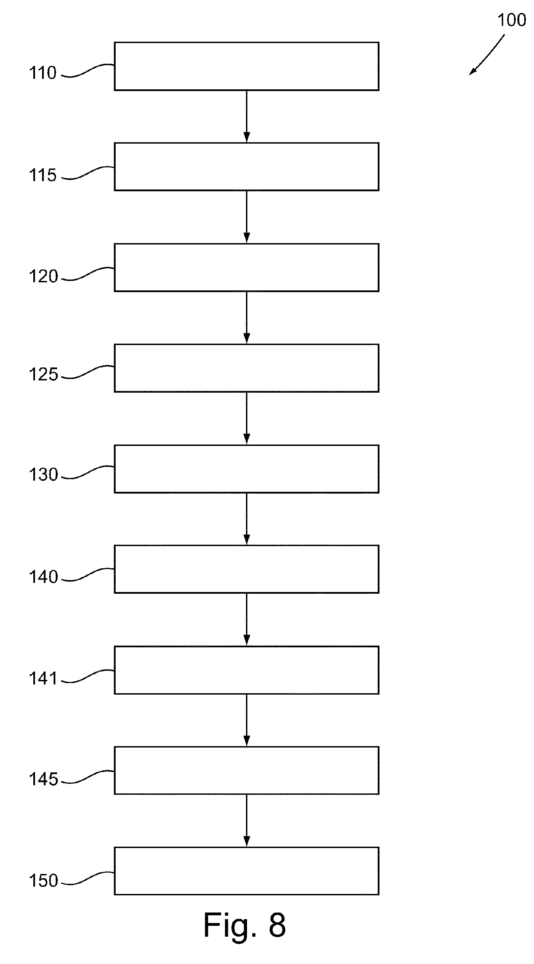

figure 8 schematically shows a block diagram of the main steps of the process for packing products based on portions of fish in the solid form according to the invention.

With reference to the figures, they illustrate a process 100 for packing products based on portions of fish in the solid form, as well as a portion of fish 10, cooked during the heat sterilization step of the packing process according to the invention, and a relative package 20.

Just as an example, figures 2, 4 and 7 show black and white photos of portions of fish in the solid form 10, consisting of slices of fillet of salmon, cooked during the packing process, and a little liquid 11, extracted from packages 20 made according to the invention and ready for use. By slices of fillet of salmon we mean a portion of salmon cut from a fillet of salmon.

According to the invention, the portions of fish in the solid form can for example be selected from fillets or steaks of fish such as salmon, tuna, bass, in which intact muscle bundles 12 can be identified.

The process 100 for vacuum packing a product based on portions of fish in the solid form in an at least partially flexible packaging, according to the invention, schematically illustrated with the block diagram of figure 8, is started from loose portions of raw fish in the solid form in the frozen state, having a temperature of around -20°C or more specifically around -18°C.

The loose portions of fish in the solid form in the frozen state are generally removed from a primary packaging containing a plurality of portions of fish, which has been cleaned, gutted, cut into portions and frozen upon being caught.

The loose portions of fish in the solid form in the frozen state are subjected to a loading step 110 on a packaging line, which takes place in the shortest time possible with respect to their removal from the refrigerating storage cells.

On the packaging line, after an optional ponderal selection step 115, the process according to the invention essentially provides for:

- the step of introducing 120 one or more portions of raw fish in the solid form in the frozen state into an at least partially flexible packaging, fed to the line;
- the step of performing mechanical vacuum 130 inside the packaging filled in with one or more portions of fish in the solid form in the frozen state;
- the step of sealing 140 the package to form a sealed package comprising one or more portions of fish in the solid form still in the frozen state;
- the step of heat sterilization 150 of the sealed package comprising one or more portions of fish in the solid form still in the frozen state in an autoclave.

The first three operations, in other words the step of introducing 120 into the package, the step of performing the vacuum 130 and the step of sealing 140 the package are preferably carried out almost simultaneously on the line.

The sealed packages containing the product based on portions of fish in the solid form still in the frozen state are then discharged from the line and collected for a predetermined maximum time period, according to a staying step 145, before being forwarded to the heat sterilization step 150 in an autoclave that takes place in groups of products.

The heat sterilization step in an autoclave provides for heating to a temperature comprised between about 110°C and 120°C for about one hour.

During the heat sterilization step 150 in an autoclave the product is cooked, passing from a frozen state to a thawed state.

During the sterilization step in an autoclave, the product is also subjected to the action of the mechanical pressure commonly present in the autoclave.

According to the invention, we consider that the portions of fish in the solid form forwarded to the heat sterilization step 150 in an autoclave are still in the frozen state if they have a core temperature of the product of at most -5°C.

Such conditions can for example be obtained through insulation of the entire production line so as to keep the temperature of the raw material at a temperature of less than -5°C, or through staying the loose portions of fish, waiting to be loaded in line, and the portions of fish sealed in the package, ready to be loaded in the autoclave for the sterilizing heat treatment, in suitable cells at controlled temperature so as to respect the temperature restriction of -5°C at the core of the portions of fish when loading into the autoclave.

Alternatively, the processing can have a speed such as to provide for a maximum processing time of 20-25 minutes from the step of removing the frozen portions of fish from the storage cells for loading 110 in line of loose frozen portions of fish to the heat sterilization step 150 of the sealed packages.

More specifically, according to a preferred embodiment, the process also comprises a step of dosing 125 seasoning liquid, such as for example oil, brine or aromatic dispersions, which salt is possibly added to, and/or other foodstuffs, such as vegetables or other. The liquid possibly added according to the invention has the sole purpose of seasoning and does not affect the packing process.

The sealing step 140 is also advantageously followed by a step of checking the seal 141.

The combination of the step of sealing 140 in a package impermeable to water, gases and microorganisms followed by the step of heat sterilization 150, makes the product commercially sterile and the package 20 conservable in normal storage conditions, in other words at room temperature, at least for a period of 24/36 months.

The at least partially flexible packaging, according to the invention, is preferably an entirely flexible bag in multilayer material impermeable to gas, and in particular to oxygen, to water and to steam and to microorganisms, capable of also providing a barrier to light, as shown in figure 6. For example, a multilayer material is used comprising a layer of aluminium, or other material with similar barrier properties.

The bag in multilayer material, which preferably will have dimensions such as to precisely receive the portions of fish to be packaged, can be of the preformed type, in other words already welded on three sides. In this case, the fourth welding of the open side is carried out after the introduction of the frozen portion of fish and of the other possible ingredients and after performing mechanical vacuum inside the bag such as to ensure the almost total removal of air. The bag can also be formed *in situ* directly from two reels of multilayer material. In this case, the two reels are unwound, after which the lower one is worked so as to create a cavity to house portions of frozen fish and other possible ingredients, after which the upper reel is placed on top. Then the four welds are carried out on the four sides in a single operation while simultaneously performing mechanical vacuum. The bag thus formed is then cut on two or four sides.

Alternatively, a rigid or semi-rigid tray can also be used, covered by a flexible film.

The package 20, shown as an example in figure 6, comprises under vacuum the product based on portions of fish in the solid form 10, cooked during the step of heat sterilization of the packing process, and a little liquid.

The example illustrated in figures 2, 4 and 7 shows portions of fish in the solid form consisting of slices of fillet of salmon that, once removed from the bag, have the typical appearance of an intact slice of fillet of salmon cooked with steam and ready to use. It is pink in colour, typical of cooked salmon.

In the bag there is also a certain amount of liquid 11, about 10-15 ml deriving from the cooking of the raw material packed uncooked, which is limpid and clear with a few drops of pink/orange-coloured fat 13.

In particular from figure 4, which shows the entire content of the package 20 poured onto a plate, it is possible to visibly notice the reduced presence of liquid 11 contained in the package 20.

The presence of albumin proteins 14, exudate from the fish, is minimal, or almost absent. The albumin proteins 14 are mainly stuck to the surface of the fish.

The consistency of the product both when cutting and when chewing is particularly soft. The flavour and the aroma are typical of a slice of steamed salmon eaten straight after cooking, in other words without being packed afterwards. Taking due care and using a fork, in the packaged product according to the invention, it is possible to separate the individual muscle bundles 12.

More generally, other types of fish packaged in portions according to the process of the invention will also share with the shown salmon some characteristics of appearance of the product and some sensorial characteristics, directly connected to the process of the invention.

The portions of cooked fish 10, packaged according to the process object of the present invention, are intact, with the muscle bundles 12 well defined and still able to be separated with little effort. The consistency of the product is soft. The little liquid 11 present is substantially released while the raw fish is cooked during the heat sterilization in an autoclave, and therefore under pressure, and it is clear. The presence of albumin proteins exudate from the fish during cooking is minimal and they are stuck to the surface of the fish.

A first evaluation of the peculiar characteristics of a portion of fish in solid form 10, cooked during packaging according to the invention, is possible from a direct comparison with a packaged product according to the prior art. In order to make the comparison easier, photographs of a slice of salmon packaged according to the prior art (figures 1 and 3) and of a slice of salmon packaged according to the invention (figures 2 and 4) have been placed side by side.

A first characteristic concerns the quantitative and qualitative evaluation of the organic exudate, i.e. the albumin proteins, which is determined by the different thermal history to which the portion of fish 10 according to the invention has been subjected with respect to the portion of fish 10' according to the prior art. It can be seen, at first sight, that in the portion of fish 10 according to the invention the presence of albumins 14 is minimal. The albumins 14 are also stuck just to some portions of the surface of the portion of fish 10 and are practically absent from the little liquid 11 comprised in the package 20.

A second characteristic concerns the ability of the portion of fish to hold water, since water bonds with proteins differently in the portion of fish 10 according to the invention with respect to the portion of fish 10' of the prior art. The different ability to hold water manifests itself in the different softness of the product, which is softer according to the invention.

A third characteristic concerns tissue damage caused to the portion of fish, which can be evaluated by comparing the different integrity of the muscle structures, which can still be distinguished and separated from one another in the portion of fish according to the invention.

A further characteristic is given by the sodium chloride content in the liquid that accompanies the portion of fish in the package.

In relation to the second characteristic indicated, in other words the consistency of the portion of fish packaged according to the present invention, which is softer with respect to the portions of fish packaged according to the prior art of reference, two different alternative comparative tests were performed to objectively quantify this characteristic in the case of fillets of salmon. The tests were carried out on samples taken from a fillet of salmon packaged like that described as prior art of reference and shown in figures 1, 3 and 5 and a fillet of salmon packaged according to the present invention.

In a first experimental test the product according to the invention and the prior art of reference were subjected to uniaxial compression tests.

Uniaxial compression is an analysis technique that measures the elastic response of the sample that is subjected to compression on an axis, recording both the force applied on the sample and the deformation obtained during compression.

The modulus of elasticity for a certain deformation is a measurement of the force needed to deform the sample up to the desired amount.

In particular, the tests were carried out through a so-called "Texture Analysis" system for food on test pieces obtained from cylinder-shaped samples having dimensions equal to 30 mm in diameter by 10 mm in height. The "Texture Analysis" system uses a known dynamometer to carry out consistency tests of the sample, in which it is possible to adjust height and speed of descent of the piston. The compression was carried out, in the direction of the axis of the sample, at a speed of 1 mm/s until a deformation of 50% is reached, i.e. 5 mm. The moduli of elasticity of the system were determined during the compression in two distinct points of the deformation curve: between 10 and 20% (E1) and between 20 and 30% (E2) thereof.

The table shows the values obtained for the innovative product and the prior art:

|  | Modulus of elasticity E1 (Pa) | Standard deviation E1 (Pa) | Modulus of elasticity E2 (Pa) | Standard deviation E2 (Pa) |
|---|---|---|---|---|
| Prior art salmon fillet | 483 | +/- 117 | 723 | +/- 182 |
| Innovative product salmon fillet | 222 | +/- 103 | 406 | +/- 130 |

The lower moduli of elasticity observed for the innovative samples indicate that it is necessary to apply a lower force compared to the samples of the prior art, for the same deformation imposed. The innovative samples are thus softer when chewing.

In a second experimental test the product according to the invention and the prior art were subjected to swelling tests.

"Swelling" is the measurement of the ability of the sample to absorb a saline solution in which it is immersed, after having been subjected to a deformation.

The tests were carried out through a "Texture Analysis" system for food, like the one described earlier. The test piece, shaped like a cylinder and having dimensions equal to 30 mm in diameter by 15 mm in height, is inserted in a cylindrical metal housing with a diameter of 30 mm, with perforated walls communicating with the saline solution (NaCl 10% weight/volume).

The sample is compressed along its axis, subjecting it to an instantaneous deformation, in other words caused by an impulse, until 20% deformation is reached. Again through the dynamometer the progression of the reaction force exerted by the test piece is measured during the 60000 successive seconds.

The force/time curves obtained from the measurements were interpolated according to the exponential decay model:

$$y = A * e^{Bx}$$

The table shows the values of the parameters A and B of the aforementioned decay model for the innovative product and the prior art:

|  | Parameter A | Standard deviation A | Parameter B (x10E-6) | Standard deviation B (x10E-6) |
|---|---|---|---|---|
| Prior art salmon fillet | 0.26 | +/- 0.05 | -6.16 | +/- 0.25 |
| Innovative product salmon fillet | 0.22 | +/- 0.08 | -4.30 | +/- 0.21 |

The innovative product shows a lower value of parameter B with respect to the prior art. This indicates a lower decrease in the force exerted on the dynamometer by the sample of the innovative product as time passes by. Such behaviour, which reflects the higher counter-pressure developed by the innovative product, is an index of the greater intensity of the "swelling" phenomenon and therefore of its greater softness with respect to the prior art.

The process according to the invention brings numerous advantages due to the direct transfer of heat that takes place between the bag and the surface of the fish in the absence of air that acts as an insulator during the heat sterilization in an autoclave.

The introduction of the step of heat sterilization of portions of fish in frozen state, whilst theoretically being a disadvantageous process in terms of energy usage, advantageously modifies the speed of chemical reactions, so as to enhance some and slow down others. This different reaction kinetics advantageously causes a reduction in the release of albumins from the muscle tissue.

The presence of little liquid, which results in a higher concentration of salt in the interface between fish and packaging also seems to advantageously affect the release of protein.

Finally, the passage from the frozen form to the thawed form carried out under mechanical pressure during heat sterilization in an autoclave advantageously preserves the integrity of the muscle bundles of the portion of fish.

The process for packing a product based on portions of fish in the solid form and a relative packaged product thus conceived can undergo numerous modifications and variants, all of which are covered by the invention; moreover, all of the details can be replaced by technically equivalent elements. In practice, the materials used, as well as the sizes, can be whatever according to the technical requirements.

**Claims**

1. Process for packing products based on portions of fish in the solid form, **characterized in that** it comprises at least:

   - the step of introducing (120) one or more portions of raw fish in the solid form in the frozen state into an at least partially flexible packaging;
   - the step of performing mechanical vacuum (130) inside said packaging filled in with said one or more portions of fish in the solid form in the frozen state;
   - the step of sealing (140) said packaging so as to form a sealed package comprising said one or more portions of fish in the solid form still in the frozen state;
   - the step of heat sterilizing (150) said sealed package comprising said one or more portions of fish in the solid form still in the frozen state in an autoclave,

   wherein said one or more portions of fish in the solid form remains in the frozen state for all the packing process, in other words during said step of introducing (120) into a package, during said step of performing mechanical vacuum (130), during said step of sealing (140) until the start up of said heat sterilization step (150) in an autoclave, said heat sterilization step (150) in an autoclave carrying out the cooking of said one or more portions of fish in the solid form starting from still in the frozen state.

2. Process according to claim 1, **characterized in that** said sealed packages are forwarded to said sterilization step (150) with said one or more portions of fish in the solid form in the frozen state having a core temperature of maximum -5°C.

3. Process according to anyone of the preceding claims **characterized in that** it also comprises a step of dosing (125) seasoning liquid, such as for example oil, brine or aromatic dispersions, which salt is possibly added to, and/or other foodstuffs, such as vegetables or other.

4. Process according to anyone of the preceding claims **characterized in that** said at least partially flexible packaging is impermeable to gases, to water, to microorganisms and to light.

5. Process according to claim 4, **characterized in that** said at least partially flexible packaging is a bag in multilayer material comprising an aluminum layer or other material having analogous barrier properties.

6. Package consisting of one or more portions of fish in the solid form (10), cooked during heat sterilization in an autoclave, with the optional addition only of seasoning liquid and/or other foodstuffs, wherein the package is commercially sterile, **characterized in that** said one or more portions of fish in the solid form (10) are vacuum contained in an at least partially flexible packaging and have muscle bundles substantially intact and separable from each other.

7. Package according to claim 6, **characterized in that** it also comprises a small quantity of cooking liquid (11), limpid and clear, and/or a minimum presence of albumin proteins (14) exudate from said one or more portions of fish in the solid form (10) during cooking, mainly adhered to the surface of said one or more portions of fish in the solid form (10).

8. Package according to claim 6 or 7, **characterized in that** said one or more portions of fish in the solid form (10) have soft consistence due to swelling with saline solution.

9. Package according to anyone of the claims 6 to 8, **characterized in that** said at least partially flexible packaging is impermeable to gases, to water, to microorganisms and to light.

10. Package comprising portions of fish in the solid form (10), cooked during heat sterilization in an autoclave, **characterized in that** it is made according to the process according to anyone of the claims 1 to 5.

**Patentansprüche**

1. Verfahren zum Verpacken von Produkten auf Grundlage von Fischportionen in fester Form, **gekennzeichnet dadurch, dass** das Verfahren mindestens umfasst:

   - Einführen (120) einer oder mehrerer Portionen rohen Fischs in fester Form in gefrorenem Zustand in eine mindestens teilweise flexible Verpackung;
   - Herstellen (130) von mechanischem Vakuum in der Verpackung, die mit den einen oder mehreren Fischportionen in fester Form in gefrorenem Zustand gefüllt ist;
   - Verschließen (140) der Verpackung, um eine geschlossene Verpackung auszubilden, umfassend die einen oder mehreren Fischportionen in fester Form und noch in gefrorenem Zustand;
   - Wärmesterilisierung (150) der verschlossenen Verpackung, umfassend die einen oder mehreren Fischportionen in fester Form und noch in gefrorenem Zustand, in einem Autoklaven,

   wobei die einen oder mehreren Fischportionen in fester Form für das ganze Verpackungsverfahren in gefrorenem Zustand bleiben, in anderen Worten, während dem Schritt des Einführens (120) in eine Verpackung, während dem Schritt des Herstellens (130) von mechanischem Vakuum, während dem Schritt des Verschließens (140) bis zum Start des Wärmesterilisierungsschritts (150) in einem Autoklaven, wobei der Wärmesterilisierungsschritt (150) in einem Autoklaven das Kochen der einen oder mehreren Fischportionen in fester Form ausführt, ausgehend von dem immer noch gefrorenen Zustand.

2. Verfahren nach Anspruch 1, **dadurch gekennzeichnet, dass** die verschlossenen Verpackungen zu dem Sterilisierungsschritt (150) mit den einen oder mehreren Fischportionen in fester Form in gefrorenem Zustand weitergeleitet werden, die eine Kerntemperatur von maximal -5°C aufweisen.

3. Verfahren nach einem der vorangegangenen Ansprüche, **dadurch gekennzeichnet, dass** das Verfahren auch Dosieren (125) von Gewürzflüssigkeit umfasst, wie z.B. Öl, Salzlake oder aromatische Dispersionen, zu denen Salz hinzugefügt werden kann, und/oder andere Lebensmittel, wie Gemüse oder sonstige.

4. Verfahren nach einem der vorangegangenen Ansprüche, **dadurch gekennzeichnet, dass** die mindestens teilweise flexible Verpackung für Gase, Wasser, Mikroorganismen und Licht undurchlässig ist.

5. Verfahren nach Anspruch 4, **dadurch gekennzeichnet, dass** die mindestens teilweise flexible Verpackung ein Beutel aus Mehrlagenmaterial ist, umfassend eine Aluminiumschicht oder ein anderes Material, das analoge Barriere-Eigenschaften aufweist.

6. Verpackung bestehend aus einer oder mehreren während der Wärmesterilisierung in einem Autoklaven gekochten Fischportionen in fester Form (10), mit der optionalen Hinzugabe nur von Gewürzflüssigkeit und/oder anderen Lebensmitteln, wobei die Verpackung kommerziell steril ist, **gekennzeichnet dadurch, dass** die einen oder mehreren Fischportionen in fester Form (10) vakuumverpackt in einer mindestens teilweise flexiblen Verpackung sind und Muskelbündel aufweisen, die im Wesentlichen intakt und voneinander trennbar sind.

7. Verpackung nach Anspruch 6, **dadurch gekennzeichnet, dass** die Verpackung auch eine kleine Menge klare und durchsichtige Kochflüssigkeit (11) und/oder eine Mindestpräsenz an Albumin Proteinen (14) aufweist, die von den einen oder mehreren Fischportionen in fester Form (10) während dem Kochen ausgeschwitzt werden und hauptsächlich an der Oberfläche der einen oder mehreren Fischportionen in fester Form (10) haften.

8. Verpackung nach Anspruch 6 oder 7, **dadurch gekennzeichnet, dass** die einen oder mehreren Fischportionen in fester Form (10) weiche Konsistenz bedingt durch Anschwellen mit Kochsalzlösung aufweisen.

9. Verpackung nach einem der Ansprüche 6 bis 8, **dadurch gekennzeichnet, dass** die mindestens teilweise flexible Verpackung für Gase, Wasser, Mikroorganismen und Licht undurchlässig ist.

10. Verpackung umfassend Fischportionen in fester Form (10), die während der Wärmesterilisierung in einem Autoklaven gekocht wurden, **dadurch gekennzeichnet, dass** die Verpackung entsprechend dem Verfahren nach einem der Ansprüche 1 bis 5 hergestellt wird.

**Revendications**

1. Procédé d'emballage de produits à base de morceaux de poisson sous la forme solide, **caractérisé en ce qu'**il comprend au moins :

   - l'étape d'introduction (120) d'un ou plusieurs morceaux de poisson cru sous la forme solide à l'état congelé dans un emballage au moins partiellement souple ;
   - l'étape de réalisation d'un vide mécanique (130) à l'intérieur dudit emballage rempli dudit ou desdits morceaux de poisson sous la forme solide à l'état congelé ;
   - l'étape de scellement (140) dudit emballage pour former un emballage scellé comprenant ledit ou lesdits morceaux de poisson sous la forme solide toujours à l'état congelé ;
   - l'étape de stérilisation thermique (150) dudit emballage scellé comprenant ledit ou lesdits morceaux de poisson sous la forme solide toujours à l'état congelé dans un autoclave,

   dans lequel ledit ou lesdits morceaux de poisson sous la forme solide restent à l'état congelé pendant la totalité du processus d'emballage, en d'autres termes durant ladite étape d'introduction (120) dans un emballage, durant ladite étape de réalisation d'un vide mécanique (130), durant ladite étape de scellement (140) jusqu'au début de ladite étape de stérilisation thermique (150) dans un autoclave, ladite étape de stérilisation thermique (150) dans un autoclave réalisant la cuisson dudit ou desdits morceaux de poisson sous la forme solide et commençant alors qu'ils sont toujours à l'état congelé.

2. Procédé selon la revendication 1, **caractérisé en ce que** lesdits emballages scellés sont envoyés à ladite étape de stérilisation (150) avec ledit ou lesdits morceaux de poisson sous la forme solide à l'état congelé ayant une température à coeur d'un maximum de -5 °C.

3. Procédé selon l'une quelconque des revendications précédentes, **caractérisé en ce qu'**il comprend également une étape de dosage (125) d'un liquide d'assaisonnement, comme par exemple de l'huile, de la saumure ou des dispersions aromatiques, auquel du sel est éventuellement ajouté, et/ou d'autres produits alimentaires, par exemple des légumes ou autres.

4. Procédé selon l'une quelconque des revendications précédentes, **caractérisé en ce que** ledit emballage au moins partiellement souple est imperméable aux gaz, à l'eau, aux micro-organismes et à la lumière.

5. Procédé selon la revendication 4, **caractérisé en ce que** ledit emballage au moins partiellement souple est un sac en un matériau multicouche comprenant une couche d'aluminium ou autre matériau ayant des propriétés barrières analogues.

6. Emballage constitué d'un ou plusieurs morceaux de poisson sous la forme solide (10), cuits durant la stérilisation thermique dans un autoclave, avec l'ajout facultatif uniquement d'un liquide d'assaisonnement et/ou d'autres produits alimentaires, dans lequel l'emballage est commercialement stérile, **caractérisé en ce que** ledit ou lesdits morceaux de poisson sous la forme solide (10) sont contenus sous vide dans un emballage au moins partiellement souple et ont leurs faisceaux musculaires sensiblement intacts et séparables les uns des autres.

7. Emballage selon la revendication 6, **caractérisé en ce qu'**il comprend également une petite quantité de liquide de cuisson (11), limpide et clair, et/ou une présence minimale d'exsudat de protéines albumine (14) dudit ou desdits morceaux de poisson sous la forme solide (10) durant la cuisson, adhérant principalement à la surface dudit ou desdits morceaux de poisson sous la forme solide (10).

8. Emballage selon la revendication 6 ou 7, **caractérisé en ce que** ledit ou lesdits morceaux de poisson sous la forme solide (10) ont une consistance molle due au gonflement avec la solution saline.

9. Emballage selon l'une quelconque des revendications 6 à 8, **caractérisé en ce que** ledit emballage au moins partiellement souple est imperméable aux gaz, à l'eau, aux micro-organismes et à la lumière.

10. Emballage comprenant des morceaux de poisson sous la forme solide (10), cuits durant la stérilisation thermique dans un autoclave, **caractérisé en ce qu'**il est préparé selon le procédé selon l'une quelconque des revendications 1 à 5.

PRIOR ART
# Fig. 1

# Fig. 2

14'          10'

PRIOR ART

# Fig. 3

14

11    13          Fig. 4          10

PRIOR ART

Fig. 5

Fig. 6

Fig. 7

100

110

115

120

125

130

140

141

145

150

Fig. 8

**REFERENCES CITED IN THE DESCRIPTION**

**Patent documents cited in the description**

- JP 4152863 A

- JP 11028078 A